# EUROPEAN PATENT APPLICATION

(11) **EP 4 503 474 A1**
(43) Date of publication of application: **05.02.2025**
(21) Application number: 24189234.8
(22) Date of filing: 17.07.2024
(51) Int. Cl.: H04B 7/185, H04L 67/12

(54) **AIRCRAFT HEALTH STATUS PARAMETER DISPLAY**

(30) Priority: 03.08.2023 US 202318365148
(71) Applicant: General Electric Company, Cincinnati, Ohio 45215-6301 (US)
(72) Inventor: SCHOLTEN, Michael, Grand Rapids, 49512-1934 (US); REIFFER, Richard, Cincinnati, 45215-6301 (US); CRAFT, Mark, Eastleigh, SO53 4YG (GB); HWAIL, Omar, Grand Rapids, 49512-1934 (US); PENA MARTINEZ, Aram, 76146 Queretato (MX)
(74) Representative: Openshaw & Co.

(57) **Abstract**

Provided is a health management system (HMS) (200) for providing health status information about an aircraft (203) to a user (201). The HMS (200) includes an aircraft health management unit (AHMU) (210) on-board the aircraft (203) configured for (i) monitoring the health status information when the aircraft (203) is airborne or stationary and (ii) recording data representative of the monitored health status information and a ground-based data delivery system (DDS) (210) configured for (i) establishing an Internet access portal for the AHMU (210) to access webservice applications and (ii) facilitating communication between the DDS (210) and AHMU (210) in accordance with protocols of the webservice applications. One (604) of the webservice applications (602) controls one session (614, 616, and 618) of the communication and another one (606, 608) of the webservice applications (602) controls another session (620, 622, 624, 626, 629, 630, 634) of the communication and the recorded data is delivered to the DDS (210) during one of the sessions.

## Description

### FIELD OF TECHNOLOGY

The present disclosure generally relates to aircraft health. More specifically, the present disclosure relates to requesting and retrieving health status information from an aircraft while airborne or stationary.

### BACKGROUND

When an aircraft is in flight, or on the ground, system maintainers desire the ability to access real-time state (e.g., health status) information from the aircraft (e.g., related to engine and avionics system performance, related subsystems, etc.). This real-time state information can help diagnose existing or emerging issues. For example, the information can include current or historic data surrounding an event the crew or maintainers received notification about. Such real-time state information could also relate, for example, to internal software logs.

Additionally, data transfers associated with the conventional systems can be bandwidth intensive and time consuming. As a result, the conventional systems are expensive. The expense is primarily associated with satellite usage required to complete such communication transactions.

### BRIEF DESCRIPTION OF THE DRAWINGS

Illustrative embodiments may take form in various components and arrangements of components. Illustrative embodiments are shown in the accompanying drawings, throughout which like reference numerals may indicate corresponding or similar parts in the various drawings. The drawings are only for purposes of illustrating the embodiments and are not to be construed as limiting the disclosure. Given the following enabling description of the drawings, the novel aspects of the present disclosure should become evident to a person of ordinary skill in the relevant art(s).
FIG. 1 illustrates a conventional user aircraft interface system for retrieval of aircraft health data.
FIG. 2 illustrates an exemplary avionics communications system constructed and arranged in accordance with embodiments of the present disclosure.
FIG. 3 is a block diagram illustration of an exemplary user vehicle information system (VIS) for retrieval of vehicle health data in accordance with a first embodiment of the present disclosure.
FIG. 4 is a block diagram illustration of an exemplary user VIS for retrieval of vehicle health data in accordance with a second embodiment of the present disclosure.
FIG. 5 is a detailed context diagram illustration of an exemplary VIS including the AHMU of FIG. 3 connected through the Internet.
FIG. 6 illustrates a flow diagram for an exemplary RPD method in accordance with the embodiments.
FIG. 7 is a block diagram illustration of various aircraft sub-systems in accordance with the embodiments.
FIG. 8 illustrates an exemplary computer system upon which embodiments of the present disclosure may be practiced.
FIG. 9 illustrates an exemplary method of practicing an embodiment of the present disclosure.

### DETAILED DESCRIPTION

While the illustrative embodiments are described herein for particular applications, it should be understood that the present disclosure is not limited thereto. Those skilled in the art and with access to the teachings provided herein will recognize additional applications, modifications, and embodiments within the scope thereof and additional fields in which the present disclosure would be of significant utility.

In the following detailed description of the present disclosure, reference is made to the accompanying drawings that form a part hereof, and in which is shown by way of illustration how one or more embodiments of the disclosure may be practiced. These embodiments are described in sufficient detail to enable those of ordinary skill in the art to practice the embodiments of this disclosure, and it is to be understood that other embodiments may be utilized and that process, electrical, and structural changes may be made without departing from the scope of the present disclosure.

The embodiments provide methods and systems that can retrieve selected data from the aircraft when the aircraft is in flight or on ground. The embodiments also provide systems that can use available communications pathways with the aircraft that use a condensed request and response format and that address the cost and bandwidth issues associated with the conventional health data retrieval systems.

Provided is an improved aircraft health management unit (AHMU) that supports requests from ground operators for remote parameter display (RPD) through wireless communications. The AHMU is an airborne device that polls a ground-based data delivery system (DDS) for pending RPD requests at a polling frequency programmable by the user. When a request is present on the DDS, the AHMU will retrieve the requested file using file transfer protocols (FTP), or the like, and generate an RPD report.

The RPD report may be transmitted over a currently available communications pathway to the DDS. If no pathway is currently available, the AHMU will retain the report and transfer the report to the DDS immediately during the next wireless transfer. Ground personnel may request reports at any time using a DDS user interface, asking for values of a set of recorded aircraft health related parameters of their choosing over a specified time interval. The AHMU will provide notification to the DDS of incorrect requests and will respond with whatever portion of the request is valid.

In the embodiments, the aircraft communications, addressing, and reporting system (ACARS) may also be used as a communications path between ground host users and the AHMU in certain circumstances.

The embodiments provide an aircraft health management system (HMS) with an ability to remotely retrieve data from an aircraft when the aircraft is in flight or on ground through an available communications pathway with the aircraft. The data includes parametric data (e.g., pressure readings, voltage readings, flight control dispositions etc.), event data, and/or software logs used to determine the real-time maintenance needs of the aircraft through notification of onboard failures and interrogation of supporting information. The HMS includes a DDS ground component and an AHMU airborne component that wirelessly communicate via secure and encrypted interfaces on/off the aircraft.

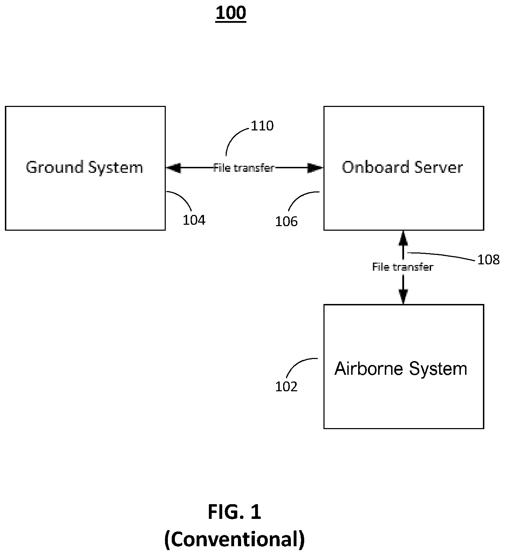

FIG. 1 illustrates a conventional user aircraft interface system (AIS) 100 for retrieval of aircraft health data. The AIS 100 includes unsecure transmissions over SATCOM/WiFi/Cellular communications link and is configured for enabling a user to monitor the performance of any aircraft's subsystems while the aircraft is in flight. In the conventional AIS 100, the aircraft includes an airborne system 102 in communication with a ground system 104. A user may access the airborne system 102 via the ground system 104 via a server 106, generally on-board the aircraft.

By way of example, a data retrieval session may be initiated when an anomaly occurs in an aircraft system while the aircraft is in flight. Once initiated, the aircraft may transmit data from the airborne system 102 over a satellite communications link in the form of a crew alerting system task message, or other methods. These task messages may be presented to aircraft crew via cockpit displays and are related to current anomalies within one or more of the aircraft's subsystems.

The on-board server 106 functions as a channel (from the aircraft) to the ground system 104 within the AIS 100. Accordingly, when anomalies occur, their representative data is input to a file for transfer 108 from the airborne system 102 to the on-board server 106. The on-board server 106 performs a file transfer 110 to transfer the data file, via a satellite communications link to the ground system 104. The file transfers 108 and 110, and other Internet based communications in the AIS 100, are based on network protocols, such as the FTP protocols.

In the conventional AIS 100, in response to the crew alerting message, a parameter request message may be transmitted by the user to the aircraft, typically over a satellite communication link, where the parameter request message includes a parameter file that specifies additional relevant parameters corresponding to health status notifications, such as the crew alerting message. Specifically, the parameter request message may request additional data corresponding to a specified amount of time of the anomaly. This additional data, for example, may be transmitted from a computer system onboard the aircraft.

The VIS 100 may be activated from the aircraft based upon occurrence of a current or ongoing anomaly while the aircraft is in flight, such as failure of an altimeter. Once activated, the VIS 100 utilizes specified pathways, such as the on-board server 106, to transfer digital files associated with the anomaly or ongoing event. By way of example, each of the files represents one or more partitioned portions of the recorded data representative of the health-related parameters.

When a data request (related to the ongoing anomaly) from the ground system 104 is present, that request is handled by the airborne system 102, a data file is created, and the data file is then transferred 108 back to the on-board server 106 for transfer 110 back to the user via the ground system 104. The production and transfer of data to and through the on-board server 106 is comparatively time-consuming and expensive based on the type and size of the transferred files 108 and 110.

For example, the AIS 100 lacks the ability to analyze specific sets of data from any specified time, only providing data within a proximity of the ongoing anomaly. That is, in the AIS 100, the airborne system 102 will measure the data for a specified amount of time, record the measured data (within the proximity of the ongoing anomaly) in the data file, and transfer the data file 108 from a computer, within the airborne system 102. In other words, conventional systems, such as the AIS 100, may only retrieve current (i.e., real time) data, representing the ongoing anomaly (such as the ongoing altimeter anomaly noted above). For example, the conventional systems would not be able to access only recorded data related to a specific issue (no longer problematic) that occurred earlier during the flight.

The AIS 100 cannot tailor or parse the data files to specific data sets that have occurred at a point in time of interest. Tailoring, or narrowing the files to only include data sets from a specific point in time of interest (i.e., only relevant data from the right time) would reduce the size of the files. In the AIS 100, files were recorded in a monolithic manner that required parsing/decoding of the entire file to find data for a specific time range. This approach limits systems, such as the AIS 100, to only analyzing data residing in buffers (e.g., random access memory or equivalent) associated with current or ongoing problems - not intermittent problems. Stated another way, the AIS 100 can only access set amounts of data that are within the proximity of a persistent anomaly. The relatively large and expansive files consume large amounts of bandwidth.

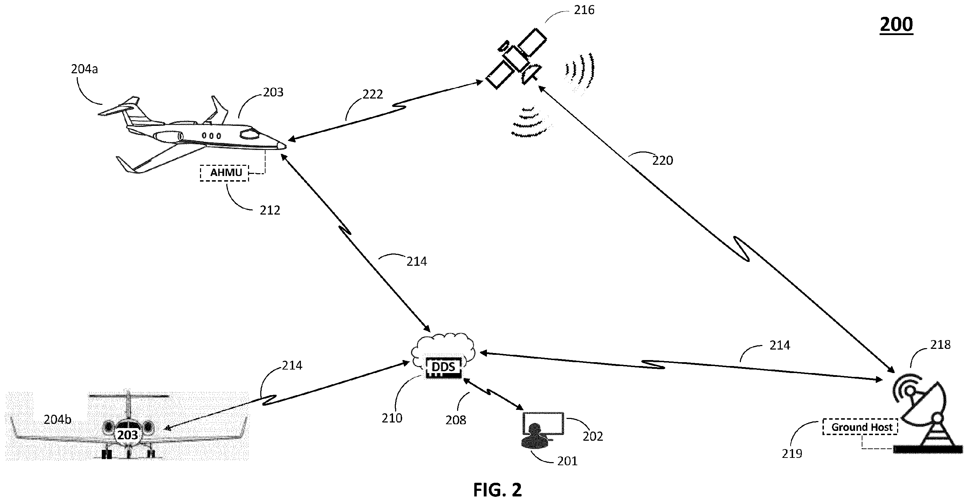

FIG. 2 illustrates an exemplary avionics system 200 constructed and arranged in accordance with the embodiments. The avionics system 200 enables a ground system operator (i.e., ground-based user) 201, via a user interface (UI) 202, to remotely retrieve data from an aircraft 203 during flight 204a or on the ground 204b. In some embodiments, functionality of the user 201 may be implemented in the form of an automated request implemented by a separate computer-controlled system. The UI 202 may be communicatively coupled, through communication links 208, to DDS 210 that communicates with an AHMU 212. By way of example only, and not limitation, the AHMU 212 may be hosted on a cloud server on the Internet.

The DDS 210 communicates to the AHMU 212 when both systems obtain Internet connectivity. During an exemplary communication exchange, the AHMU 212 is configured to retrieve a data request, initiated by the user 201, from the DDS 210. In the embodiments, the AHMU 212 continuously records parametric data during operation of the aircraft 203. The AHMU 212 receives/retrieves the request, parses it, records it, generates the response, and then sends the requested data back to the DDS 210. The DDS 210 provides the response back to the user 201. This process facilitates continuous management and analysis of health aircraft 203 during flight, or on the ground. In this manner, as-needed health status and maintenance support information can be provided upon request from the user 201.

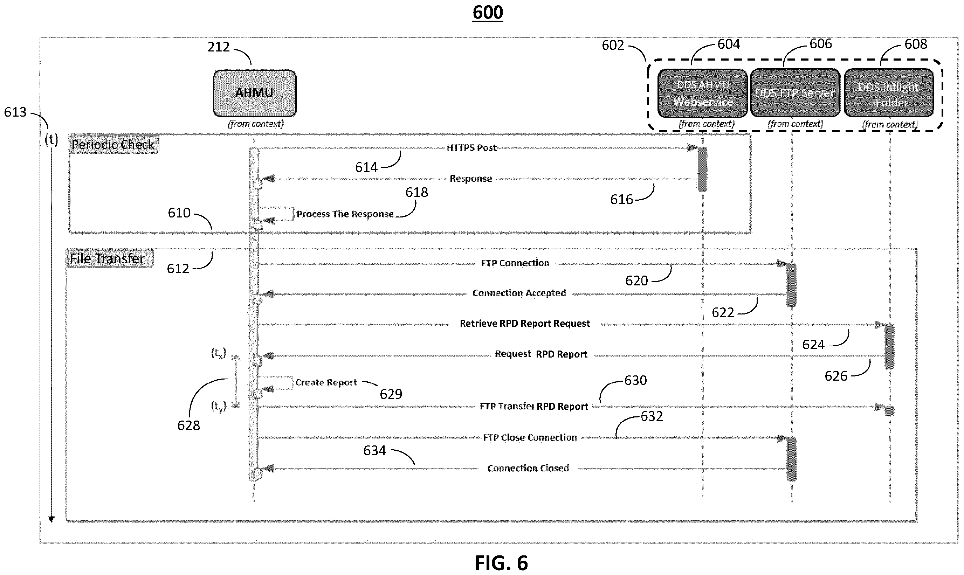

AHMU 212 receives state data (i.e., data reflecting a health status of the aircraft 203) requests via SATCOM/WiFi/Cellular from the user 201. As explained in greater detail below in reference to FIG. 6, the AHMU 212 periodically polls the DDS 210 for pending RPD requests at a polling frequency determined by the user 201. The AHMU 212 acquires and records real-time data from multiple sensors that are integrated into the aircraft components, systems, and subsystems for purposes of maintaining aircraft safety and reliability. When a request is pending, the AHMU 212 will retrieve the request file using selected protocols, such as FTP, for example, and generate an RPD report. The RPD report includes state data such as parametric data, event data, software logs, and/or other data relevant to the health status of the aircraft 203. By way of example, the RPD report may be streamed to the DDS 210 or delivered in the form of a file transfer.

Initiated by the user 201, the DDS 210 may also access the AHMU 212 via satellite 216 through ground-based satellite gateway 218 via the communication links 214, or other wireless communications pathway. The satellite gateway 218 includes a SATCOM ground host 219 for supporting communication with the satellite 216. Satellite communication links 220 establish a communications path between the satellite 216 and the satellite gateway 218. Communication links 222 communicatively couple the satellite 216 with the AHMU 212 on-board the aircraft 203.

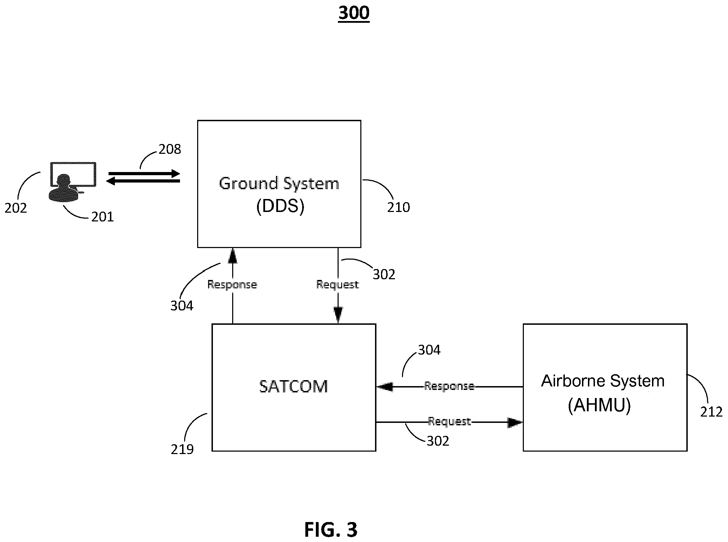

FIG. 3 is a block diagram illustration of an exemplary VIS 300 for retrieval of vehicle health data in accordance with the first embodiment.

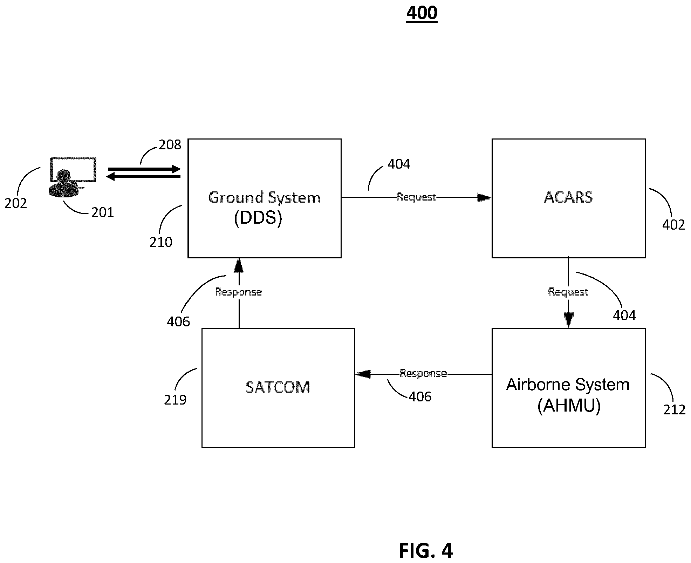

Various aspects of the user VIS 300, illustrated in FIG. 2, are repeated in the discussion of FIG. 3 in greater detail. A fundamental aspect of the VIS system 300 of FIG. 3 (and VIS 400 of FIG. 4 below) is helping to bring a greater knowledge of data, otherwise stored on the aircraft 203, down to the user 201. In this manner, the user 201, or other maintainers, can more readily perform maintenance actions, maintenance planning, or ordering parts by providing additional relevant contextual information.

By way of example, when notification of a failure is received (e.g., the altimeter failure above), parametric data being recorded by the AHMU 212 specifically related to the failure, can be requested by the user 201. This data can be used to provide greater knowledge/insight into the altimeter failure. For example, the data may reveal whether the altimeter experienced a hard failure or whether faulty or corrupted data was input to the altimeter. Analyzing the parametric, or underlying data, associated with the failure will provide insight into the specific nature of the failure (e.g., what failed, how extensive etc.).

In the VIS 300, the user 201 initiates a bi-directional communications session through the UI 202 and the communication links 208 by requesting real time state information about systems and subsystems of the aircraft 203 from the AHMU 212. The VIS 300 is based on an open architecture and may also utilize pre-existing structures and in-flight notifications and alerts. For example, the user 201 may desire to drill down into an earlier aircraft alert/notification for additional details and to determine whether additional maintenance may be advisable in relation to the alerts or notifications.

In the embodiments, the airborne systems, such as the AHMU 212, have the ability to accept requests for specific historic data from a specific time period. That is, the AHMU 212 data can be parsed or indexed during flight. Conventional systems, for example, can only parse data when the aircraft 203 is on the ground and after a full data transfer. In the embodiments, as discussed above and below, any data can be remotely requested at any time (current or historic), while the aircraft 203 is in flight or when the aircraft 203 is on the ground. The user 201 can request any recorded parameters from any instance of time occurring during a maximum time interval.

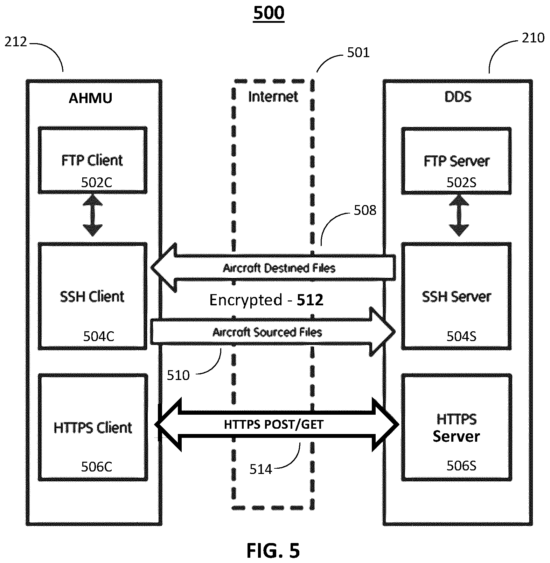

By enabling the parsing of current or historical aircraft data, the VIS 300 expands the type of data available in comparison to the conventional VIS 100. Additional protocol methodologies, in relation to the VIS 300, are discussed in greater detail in reference to FIGs. 5-7 below.

In an exemplary RPD session, an RPD request 302, pending in the DDS 210, is retrieved by the AHMU 212 through a connection with the SATCOM ground host 219. Responsive to the request 302, a response request file 304 may be returned to the DDS 210 through the SATCOM ground host 219, or other wireless communications path, for monitoring and analysis by the user 201 via the communication links 208 and the user interface 202.

In one exemplary embodiment, the DDS 210 provides a webservice application that facilitates secure communication between the user 202 and the AHMU 212. Specifically, the DDS 210 establishes an Internet access portal for the AHMU 212 to access webservice applications and provide communication between the DDS 210 and AHMU 212. A description of a webservice enabled DDS providing Internet access for the AHMU 212 is provided in greater detail below, in relation to FIG. 6.

FIG. 4 is a block diagram illustration of an exemplary VIS 400 for retrieval of vehicle health data in accordance with a second embodiment.

In comparison to the VIS 300, the VIS 400 illustrates how the embodiments can accommodate different communication paths between the AHMU 212 and the DDS 210. For example, different communication paths might be required when an Internet connection is not available or when the security/safety approach of the aircraft 203 limits communication methods.

In the exemplary VIS 400, ACARS functionality is available, providing a unidirectional path between the AHMU 212 and the DDS 210.

By way of background, ACARS provides a digital data link system for transmission of short messages between the aircraft 203 and the ground-based user 201. ACARS messages are transmitted using one of three possible data link methods: very high frequency (VHF), VDL (VHF Data Link) which is line-of-sight limited; SATCOM (not available in polar regions); or high frequency (HF) or HFDL (HF Data Link). The VIS 400 includes an ACARS uplink module 402 to provide ACARS connectivity.

In the VIS 400, the AHMU 212 receives a data request 404 from the DDS 210. Connectivity between the DDS 210 and the AHMU 212 may be provided by the ACARS uplink module 402. Thus, the ACARS uplink module 402 is configured to receive the request 404 from the DDS 210 (i.e., the ground) and provide the request 404 to the AHMU 212 (i.e., the aircraft 203). By way of example, the data request 404 from the DDS 210 may be a request for parametric data related to the aircraft 203 during flight. A response 406 to the request 404 is provided from the AHMU 212 to the DDS 210 using connectivity provided by the SATCOM ground host 219 or other wireless communication paths.

FIG. 5 is a detailed context diagram illustration of an exemplary VIS 500 including the AHMU 212 and DDS 210 of FIG. 3 and FIG. 4 connected via the Internet 501. To provide Internet connectivity between the AHMU 212 and DDS 210, protocols in accordance with the transmission control protocol/Internet protocol (TCP/IP) are used. By way of background only, FTP (noted above) is a commonly used protocol to transfer files under TCP/IP. FTP transfers are based on a client-server architecture, where the FTP client generally holds files requested by the FTP server. Thus, in the exemplary non-limiting illustration of FIG. 5, the AHMU 212 functions as the FTP client and the DDS 210 functions as the FTP server.

Accordingly, the AHMU 212, in the VIS 500, includes an FTP client 502C, a secure shell (SSH) client 504C, and a hypertext transfer protocol secure (HTTPS) client 506C. The DDS 210 side of the VIS 500 includes an FTP server 502S (corresponding to the FTP client 502C), an SSH Server 504S (corresponding to the SSH Client 504C), and an HTTPS Server 506S (corresponding to the HTTPS Client 506C).

By way of example, the SSH client 504C and SSH Server 504S enable establishment of an encrypted SSH interface that permits SSH tunneling of the FTP communication from a security perspective. For example, aircraft destined files 508 and aircraft sourced files 510 may transfer across the Internet 501 using an encrypted interface 512. The HTTPS Client 506C and the HTTPS Server 506S provide secure communications using tokens and two-factor authentication for selected aircraft sourced files via an HTTPS Post/Get transfer 514. By comparison, this approach is less burdensome on the data volume, thus providing cost savings.

Although FTP/SSH authentication protocols are used in the exemplary VIS 500, embodiments of the present disclosure are not so limited. For example, other more general secure file transfer protocols may be used, such as the SSH file transfer protocol (SFTP), FTP secure (FTPS), applicability statement 2 and others are known to those of skill in the art and are within the spirit and scope of the embodiments.

FIG. 6 illustrates a flow diagram for an exemplary RPD method 600 of a communications session between the AHMU 212 and an exemplary DDS 602. More specifically, the method 600 is one example of implementing RPD techniques using an Internet webservice to connect the AHMU 212 to the DDS 602 to accommodate delivery of RPD reports. The specific protocols and methodologies shown in the method 600 are merely non-limiting examples of implementing an embodiment of the present disclosure. Other examples and implementations are apparent to those of skill in the art and are within the spirit and scope of the disclosure.

By way of background, webservice applications provide interoperable machine-to-machine Internet connectivity. Additionally, when webservice applications are used, web technologies such as HTTP and HTTPS transfer machine-readable file formats. Therefore, in the illustration of FIG. 6, the method 600 is performed by the DDS 602. By way of example only, and not limitation, the DDS 602 includes different webservices components or applications. For example, the DDS 602 includes an AHMU webservice module 604 to facilitate Internet connectivity with the AHMU 212, a DDS FTP server 606, and a DDS inflight folder 608 functioning as a directory where the requested files are stored.

Each of the DDS 602 webservices applications plays a unique role in facilitating and controlling delivery of the FTP report from the AHMU 212 to the DDS 602. For example, in the illustrious embodiment of FIG. 6 and explained in greater detail below, the AHMU webservice module 604 facilitates determining whether an RPD request has been queued. If an RPD is queued, the FTP server 606 establishes and closes the FTP connection for secure delivery of the RPD report. The in-flight folder 608 stores and delivers the actual RPD report.

In the embodiments, the method 600 includes a periodic check block 610 and a file transfer block 612, both executed along vertical timeline 613. Within the periodic check block 610, a customer, via the AHMU 212, may attempt to log into the DDS AHMU webservice 604 (i.e., the ground) by sending an HTTPS post request 614. In the method 600, the customer can also establish how often the DDS 602 is polled to inquire whether an RPD request is pending. In the embodiments, for example, the DDS 602 may be polled periodically at a predetermined frequency (e.g., once per minute, once every 5 minutes, once every 10 minutes, etc.).

The polling frequency may be implemented as a software rule to establish a periodic connection using an available communications path (e.g., via the SATCOM ground host 219, or another wireless connection path). In response to the HTTPS post request 614, a corresponding response 616 is provided to the AHMU 212 from the webservice 604. The response 616 may contain metadata indicating the presence or absence of an RPD request, that is, whether and RPD request has been queued. In one example embodiment, the metadata is captured in a JavaScript Object Notation (JSON) file. The response 616 is processed at block 618 of the exemplary method 600.

The HTTPS post request 614 (within the periodic check block 610) is a faster, more streamlined, and correspondingly cheaper (e.g., lighter weight) authentication to simply determine if an RPD request is pending. A different request type will be used to ultimately perform the RPD file transfer. That is, the customer can perform periodic checks to the DDS 602 (i.e., the ground) to determine whether an RPD request is pending and can control the frequency of these checks. By having the lighter weight checking option and controlling the polling frequency, the customer controls the data volume and responsivity of the system. Accordingly, the customer correspondingly controls inflight data costs. These features are not available in conventional user VIS systems, such as the user VIS system 100 of FIG. 1.

If an RPD request is pending, the method 600 attempts to connect with the DDS FTP server 606 using FTP/SSH authentication at block 620. As noted above, other authentication techniques and secure interface technologies/methods are known to those of skill in the art and would be within the spirit and scope of the present disclosure. The connection attempt performed by the AHMU 212 with the DDS FTP Server 606 is accepted at block 622. At block 624, and after logging into the FTP server 606, the RPD file request is retrieved from the DDS inflight folder 608 - the specific location where the RPD file is stored. Responsive to the RPD file request (message) 624, the corresponding file is requested from the AHMU 212 in block 626.

In the embodiments, the data request formats/protocols used in the AHMU (e.g., the AHMU 212) on the aircraft 203 match the data request formats/protocols used in the DDS (e.g., the DDS 210, 600). In particular, the file request and response formats are condensed to minimize data volume, thus requiring decoding for presentation by the DDS. This process simplifies and condenses the data transfer process, consequently reducing the amount of data required. Smaller data files request less satellite time, ultimately reducing cost.

After the actual RPD file is requested in block 626, a wait time 628 may be imposed, for example, if the request has current or future data. In this example, the wait time 628 provides time for data the requested RPD file 626 to be recorded, prior to being accessed. For example, if the request relates to data indicative of a current or ongoing anomaly, it can take up to several minutes to move the RPD file data from temporary storage buffers to memory for longer-term storage. In one example, the temporary storage buffers may include random access memory (RAM), whereas the longer-term storage is solid state. A wait time is not imposed for purely historical requests.

When the wait time 628 has elapsed, a response or report is created in block 629. The report may be indexed to include current data (e.g., reflecting an ongoing anomaly) or historic data from a specified time period. By way of example, the indexing is provided by the file structure stored within the airborne system (e.g., the AHMU 212). That is, the data is stored in the AHMU 212 in a series of files that permit location of the requested parametric or event data for the specific time period in a computing resource restrained fashion. This allows the ground system (e.g., the DDS 602) to specifically request (e.g., parameter, time range, rate) and the AHMU 212 to respond.

Thus, the DDS 602 may request different data types because the data provided from the AHMU 212 is available in an indexed manner. By way of example, instead of a request seeking the next 60 seconds of the altitude data, the request seeks the altitude data for 30 seconds before and 30 seconds after 10:05 Greenwich Mean Time (GMT). This allows the investigation of an event that happened precisely at 10:05 rather than extrapolating based on current values. After creation of the report, a report file is transferred in block 630, and the connections are closed in blocks 632 and 634.

In the manner discussed, the example embodiments described in FIGs. 5-6 have expanded the types of RPD data that can be requested, provided greater integration of the data, enhanced security, and provided more flexible mechanisms for RPD request retrievals.

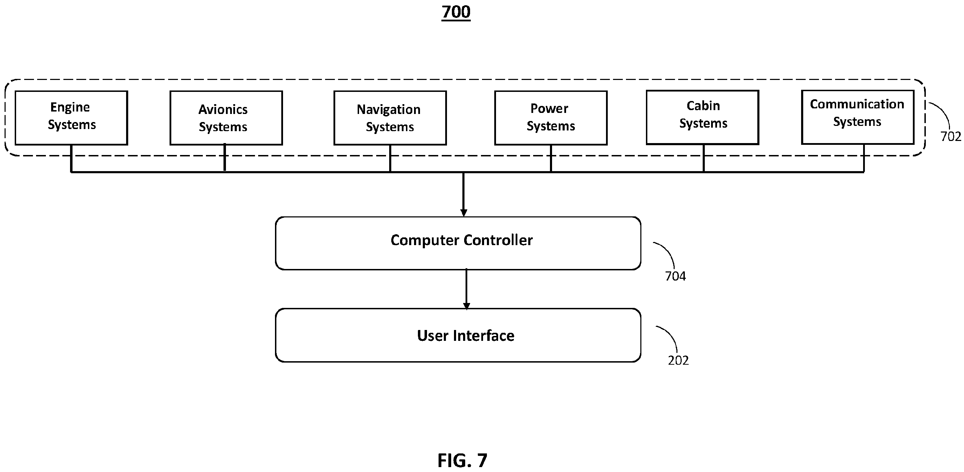

FIG. 7 is a block diagram illustration 700 depicting various sub-systems 702 the aircraft 203 configured for remote parameter display via the embodiments described herein. By way of example only, and not limitation, data from the subsystems 702 is accessible to the user 201 via the user interface 202. Although the subsystems 702 only show six subsystems, the embodiments of the disclosure are not limited to these six systems. Additionally, a plurality of recorded parameters can be monitored across the various aircraft systems and subsystems. Once a data request is generated in the DDS, the AHMU retrieves/receives the request, parses it, generates the response, and then sends the requested data back to the DDS. The subsystems 702 are communicatively coupled to the controller 704 and may include, to name a few, engine systems, avionics systems, navigation systems, power systems, cabin systems, communication systems.

A computer controller 704 is communicatively coupled to the user interface 202 and may include other hardware and/or software components or subsystems associated with the aircraft 203 and the AHMU 212. The controller 704 may also include one or more application programming interfaces (API) and enables the user 201 to manage and control the subsystems 702.

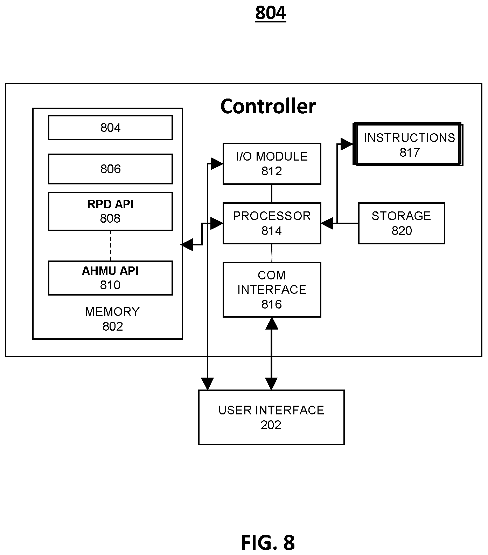

FIG. 8 illustrates the controller 704 depicted in reference to FIG. 7. In the embodiments, the controller 704 may be application-specific hardware, software, and firmware implementation of the method 600 described above. The controller 704 may include a processor 814 configured to execute one or more, or all of the blocks of the method 600 or the functions of the exemplary AHMU 212 described above.

The processor 814 can have a specific structure imparted to the processor 814 by instructions stored in a memory 802 and/or by instructions 818 fetchable by the processor 814 from a storage medium 820. The storage medium 820 can be remote and communicatively coupled to the controller 704. Such communications can be encrypted.

The controller 804 can be a stand-alone programmable system, or a programmable module included in a larger system. For example, the controller 704 can include software functioning as the AHMU 212. The controller 704 may include one or more hardware and/or software components configured to fetch, decode, execute, store, analyze, distribute, evaluate, and/or categorize information.

The processor 814 may include one or more processing devices or cores (not shown). In some embodiments, the processor 814 may be a plurality of processors, each having either one or more cores. The processor 814 can execute instructions fetched from the memory 802, i.e., from one of memory modules 804, 806, 808, or 810. Alternatively, the instructions can be fetched from the storage medium 820, or from a remote device connected to the controller 704 via a communication interface 816. Furthermore, the communication interface 816 can also interface with computer systems within the aircraft 203 or the user interface 202. An I/O module 812 may be configured for additional communications to or from the aircraft subsystems 702.

Without loss of generality, the storage medium 820 and/or the memory 802 can include a volatile or non-volatile, magnetic, semiconductor, tape, optical, removable, non-removable, read-only, random-access, or any type of non-transitory computer-readable computer medium. The storage medium 820 and/or the memory 802 may include programs and/or other information usable by processor 814. Furthermore, the storage medium 820 can be configured to log data processed, recorded, or collected during the operation of the controller 704.

The data may be time-stamped, location-stamped, cataloged, indexed, encrypted, and/or organized in a variety of ways consistent with data storage practice. By way of example, the memory module 802 stores instructions that represent the earlier described RPD API 808 and the AHMU API 810. The instructions embodied in the memory module 802 can cause the processor 814 to perform certain operations consistent with the functions described in FIGs. 2-7 above.

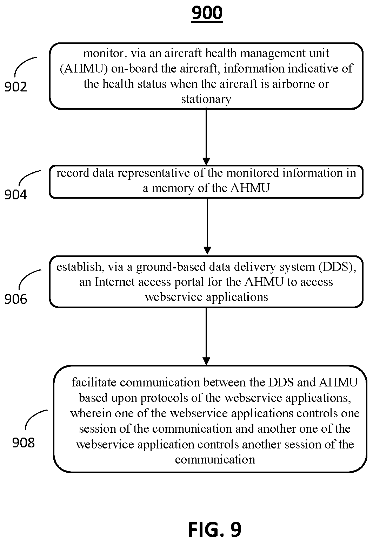

FIG. 9 illustrates an exemplary method 900 of practicing an embodiment of the present disclosure. The method 900 begins by monitoring, via an AHMU on-board the aircraft, information indicative of the health status when the aircraft is airborne or stationary, in block 902. For example, the AHMU 212 acquires and records real-time data from multiple sensors that are integrated into the aircraft components, systems, and subsystems for purposes of maintaining aircraft safety and reliability. In block 904, data representative of the monitored information is recorded in a memory of the AHMU. Block 906 includes establishing, via a ground-based data delivery system (DDS), an Internet access portal for the AHMU to access web service applications.

The Internet access portal establishes an interface, or communications path, between the user and the AHMU. Block 908 includes facilitating communication between the DDS and the AHMU based upon protocols of the webservice applications, such as FTP or HTTPS, to name a few. One of the webservice applications controls one session of the communication. For example, as described above in relation to FIG. 6 depicting a communications session between the AHMU and the DDS, a DDS FTP server webservice application (within the DDS) may initially accept a request for an FTP connection. Another one of the webservice applications, such as the DDS inflight folder, may control another session of the communication. For example, the DDS inflight folder receives the request from the AHMU to retrieve the RPD report.

The embodiments described herein provide methods and systems that can retrieve selected data from the aircraft when the aircraft is in flight or on ground. An exemplary system a ground component (e.g., the DDS) provides an interface for a user and facilitates generation of data requests. An airborne component (e.g., the AHMU) receives the request, parses the related data, and generates a response in the form of a report to the user via the DDS. The report may be indexed to include current data (e.g., reflecting an ongoing anomaly) or historic data from a specified time period.

The embodiments also provide systems that can use available communications pathways with the aircraft that use a condensed request and response format and that address the cost and bandwidth issues associated with the conventional health data retrieval systems.

The description herein is provided to enable a person skilled in the art to make or use the disclosure. Various modifications to the disclosure will be apparent to those skilled in the art, and the generic principles defined herein may be applied to other variations without departing from the scope of the disclosure. Thus, the disclosure is not limited to the examples and designs described herein but is to be accorded the broadest scope consistent with the principles and novel features disclosed herein.

Further aspects are provided by the subject matter of the following clauses:
A health management system (HMS) for providing health status information about an aircraft to a user, includes an aircraft health management unit (AHMU) on-board the aircraft configured for (i) monitoring the health status information when the aircraft is airborne or stationary and (ii) recording data representative of the monitored health status information and a ground-based data delivery system (DDS) configured for (i) establishing an Internet access portal for the AHMU to access webservice applications and (ii) facilitating communication between the DDS and AHMU in accordance with protocols of the webservice applications. One of the webservice applications controls one session of the communication and another one of the webservice applications controls another session of the communication, and the recorded data is delivered to the DDS during one of the sessions.
The health management system of any preceding clause, wherein the monitored information includes at least one of recorded parameters, events, and software logs; and wherein the recorded data is stored in a computer memory.
The health management system of any preceding clause, wherein the communication occurs via a wireless communications path.
The health management system of any preceding clause, wherein the recorded data is parsed into digital files, each file representing a portion of the monitored health status information.
The health management system of any preceding clause, wherein the protocols include at least one from the group including file transfer protocol (FTP), hypertext transfer protocol (HTTP), hypertext transfer protocol secure (HTTPS), and general secure file transfer protocols.
The health management system of any preceding clause, wherein the DDS includes two or more components separately communicating with the AHMU.
The health management system of any preceding clause, wherein the parsing allows the user to remotely request the recorded parameters, events, or software logs from any instance of time.

A method for providing health status of an aircraft to a user, includes monitoring, via an aircraft health management unit (AHMU) on-board the aircraft, information indicative of the health status when the aircraft is airborne or stationary; recording data representative of the monitored information in a memory of the AHMU; establishing, via a ground-based data delivery system (DDS), an Internet access portal for the AHMU to access webservice applications; and facilitating communication between the DDS and AHMU based upon protocols of the webservice applications; wherein one of the webservice applications controls one session of the communication and another one of the webservice application controls another session of the communication.

The method of any preceding clause, wherein the communication occurs via a wireless communications path.

The method of any preceding clause, wherein the recorded data is parsed into digital files, each file representing a portion of the monitored health status information.

The method of any preceding clause, wherein the parsing allows a user to remotely request any recorded parameters, events, or software logs from any instance of time.

The method of any preceding clause, wherein the protocols include at least one from the group including file transfer protocol (FTP), hypertext transfer protocol (HTTP), hypertext transfer protocol secure (HTTPS), and general secure file transfer protocols.

The method of any preceding clause, wherein the DDS includes two or more components separately communicating with the AHMU.

A non-transitory computer readable medium having stored thereon computer executable instructions that, if executed by a computing device, cause the computing device to perform a method for providing health status information about an aircraft to a user, the method includes monitoring, via an aircraft health management unit (AHMU) on-board the aircraft, information indicative of the health status when the aircraft is airborne or stationary; recording data representative of the monitored information in a memory of the AHMU; establishing, via a ground-based data delivery system (DDS), an Internet access portal for the AHMU to access webservice applications; and facilitating communication between the DDS and AHMU based upon protocols of the webservice applications; and wherein one of the webservice applications controls one session of the communication and another one of the webservice application controls another session of the communication.

The non-transitory computer readable medium of any preceding clause, wherein the recorded data is parsed into digital files, each file representing a portion of the monitored health status information.

The non-transitory computer readable medium of any preceding clause, wherein the parsing allows a user to remotely request any recorded parameters, events, or software logs from any instance of time.

The non-transitory computer readable medium of any preceding clause, wherein the protocols include at least one from the group including file transfer protocol (FTP), hypertext transfer protocol (HTTP), hypertext transfer protocol secure (HTTPS), and general secure file transfer protocols; and wherein the facilitating communication includes communicating with two or more components of the DDS, each separately communicating with the AHMU.

The non-transitory computer readable medium of any preceding clause, wherein the facilitating communication includes communicating with two or more components of the DDS, each separately communicating with the AHMU.

The non-transitory computer readable medium of any preceding clause, wherein the recorded data is delivered to the DDS during one of the sessions of communication.

The non-transitory computer readable medium of any preceding clause, wherein an FTP connection is established during another of the sessions of communication.

The non-transitory computer readable medium of any preceding clause, wherein an HTTPS post request is sent during another of the sessions of communication.

A health management system (HMS) (200) for providing health status information about an aircraft (203) to a user (201), comprising:
an aircraft health management unit (AHMU) (212) on-board the aircraft (203) configured for (i) monitoring the health status information when the aircraft (203) is airborne or stationary and (ii) recording data representative of the monitored health status information; and
a ground-based data delivery system (DDS) (210) configured for (i) establishing an Internet access portal (501) for the AHMU (212) to access webservice applications (602) and (ii) facilitating communication between the DDS (210) and AHMU (212) in accordance with protocols of the webservice applications;
wherein one (604) of the webservice applications (602) controls one session (614, 616, and 618) of the communication and another one (606, 608) of the webservice applications (602) controls another session (620, 622, 624, 626, 629, 630, 634) of the communication; and
wherein the recorded data is delivered to the DDS (210) during one of the sessions.

The HMS (200) of any preceding clause, wherein the monitored information relates to at least one of engine, avionics, navigation, power, cabin, and communication systems (702) on-board the aircraft (203);
and wherein the recorded data is stored in a computer memory (802).

The HMS (200) of any preceding clause, wherein the communication occurs via a wireless communications path (214, 220, 222).

The HMS (200) of any preceding clause, wherein the recorded data is parsed into digital files, each file representing a portion of the monitored health status information.

The HMS (200) of any preceding clause, wherein the protocols include at least one from the group including file transfer protocol (FTP) (502C, 502S)), hypertext transfer protocol (HTTP), hypertext transfer protocol secure (HTTPS) (506C, 506S), and general secure file transfer protocols.

The HMS (200) of any preceding clause, wherein the DDS (602) includes two or more components (604, 606, 608) separately communicating with the AHMU (212).

The HMS (200) of any preceding clause, wherein the parsing allows the user (201) to remotely request any recorded parameters, events, or software logs from any instance of time.

The HMS (200) of any preceding clause, wherein the AHMU (212) is hosted on a cloud server on the Internet.

A method (900) for providing health status of an aircraft (203) to a user (201), comprising:
monitoring (902), via an aircraft health management unit (AHMU) (212) on-board the aircraft (203), information indicative of the health status when the aircraft (203) is airborne or stationary;
recording (904) data representative of the monitored information in a memory (802) of the AHMU (212);
establishing (906), via a ground-based data delivery system (DDS) (210), an Internet access portal (501) for the AHMU (212) to access webservice applications (602); and
facilitating (906) communication between the DDS (210) and AHMU (212) based upon protocols of the webservice applications;
wherein one (604) of the webservice applications (602) controls one session (614, 616, and 618) of the communication and another one (606, 608) of the webservice applications (602) controls another session (620, 622, 624, 626, 629, 630, 634) of the communication.

The method (900) of any preceding clause, wherein the communication occurs via a wireless communications path (214, 220, 222).

The method (900) of any preceding clause, wherein the recorded data is parsed into digital files, each file representing a portion of the monitored health status information.

The method (900) of any preceding clause, wherein the parsing allows a user (201) to remotely request any recorded parameters, events, or software logs from any instance of time.

The method (900) of any preceding clause, wherein the protocols include at least one from the group including file transfer protocol (FTP), hypertext transfer protocol (HTTP), hypertext transfer protocol secure (HTTPS), and general secure file transfer protocols.

The method (900) of any preceding clause, wherein the DDS (210) includes two or more components separately communicating with the AHMU (212).

The method (900) of any preceding clause, wherein the monitored information relates to at least one of engine, avionics, navigation, power, cabin, and communication systems (702) on-board the aircraft (203);
and wherein the recorded data is stored in a computer memory (802).

## Claims

1. A health management system (HMS) (200) for providing health status information about an aircraft (203) to a user (201), comprising:
an aircraft health management unit (AHMU) (212) on-board the aircraft (203) configured for (i) monitoring the health status information when the aircraft (203) is airborne or stationary and (ii) recording data representative of the monitored health status information; and
a ground-based data delivery system (DDS) (210) configured for (i) establishing an Internet access portal (501) for the AHMU (212) to access webservice applications (602) and (ii) facilitating communication between the DDS (210) and AHMU (212) in accordance with protocols of the webservice applications;
wherein one (604) of the webservice applications (602) controls one session (614, 616, and 618) of the communication and another one (606, 608) of the webservice applications (602) controls another session (620, 622, 624, 626, 629, 630, 634) of the communication; and
wherein the recorded data is delivered to the DDS (210) during one of the sessions.

2. The HMS (200) of claim 1, wherein the monitored information relates to at least one of engine, avionics, navigation, power, cabin, and communication systems (702) on-board the aircraft (203);
and wherein the recorded data is stored in a computer memory (802).

3. The HMS (200) of claim 2, wherein the communication occurs via a wireless communications path (214, 220, 222).

4. The HMS (200) of any preceding claim, wherein the recorded data is parsed into digital files, each file representing a portion of the monitored health status information.

5. The HMS (200) of any preceding claim, wherein the protocols include at least one from the group including file transfer protocol (FTP) (502C, 502S)), hypertext transfer protocol (HTTP), hypertext transfer protocol secure (HTTPS) (506C, 506S), and general secure file transfer protocols.

6. The HMS (200) of claim 5, wherein the DDS (602) includes two or more components (604, 606, 608) separately communicating with the AHMU (212).

7. The HMS (200) of claim 6, wherein the parsing allows the user (201) to remotely request any recorded parameters, events, or software logs from any instance of time.

8. The HMS (200) of any preceding claim, wherein the AHMU (212) is hosted on a cloud server on the Internet.

9. A method (900) for providing health status of an aircraft (203) to a user (201), comprising:
monitoring (902), via an aircraft health management unit (AHMU) (212) on-board the aircraft (203), information indicative of the health status when the aircraft (203) is airborne or stationary;
recording (904) data representative of the monitored information in a memory (802) of the AHMU (212);
establishing (906), via a ground-based data delivery system (DDS) (210), an Internet access portal (501) for the AHMU (212) to access webservice applications (602); and
facilitating (906) communication between the DDS (210) and AHMU (212) based upon protocols of the webservice applications;
wherein one (604) of the webservice applications (602) controls one session (614, 616, and 618) of the communication and another one (606, 608) of the webservice applications (602) controls another session (620, 622, 624, 626, 629, 630, 634) of the communication.

10. The method (900) of claim 9, wherein the communication occurs via a wireless communications path (214, 220, 222).

11. The method (900) of any of claims 9 to 10, wherein the recorded data is parsed into digital files, each file representing a portion of the monitored health status information.

12. The method (900) of claim 11, wherein the parsing allows a user (201) to remotely request any recorded parameters, events, or software logs from any instance of time.

13. The method (900) of any of claims 9 to 12, wherein the protocols include at least one from the group including file transfer protocol (FTP), hypertext transfer protocol (HTTP), hypertext transfer protocol secure (HTTPS), and general secure file transfer protocols.

14. The method (900) of any of claims 9 to 13, wherein the DDS (210) includes two or more components separately communicating with the AHMU (212).

15. The method (900) of claim 10, wherein the monitored information relates to at least one of engine, avionics, navigation, power, cabin, and communication systems (702) on-board the aircraft (203);
and wherein the recorded data is stored in a computer memory (802).
